# EUROPEAN PATENT SPECIFICATION

(11) **EP 4 458 652 B1**
(45) Date of publication and mention of the grant of the patent: **29.04.2026**
(21) Application number: 23171611.9
(22) Date of filing: 04.05.2023
(51) Int. Cl.: B62D 33/06

(54) **MOUNTING ARRANGEMENT FOR MOUNTING A CAB TO A CHASSIS OF A VEHICLE**
MONTAGEANORDNUNG ZUR MONTAGE EINER KABINE AN EINEM FAHRWERK EINES FAHRZEUGS
DISPOSITIF DE MONTAGE POUR LE MONTAGE D'UNE CABINE SUR UN CHÂSSIS D'UN VÉHICULE

(43) Date of publication of application: 06.11.2024
(73) Proprietor: VOLVO TRUCK CORPORATION, 405 08 Göteborg (SE)
(72) Inventor: Saroha, Lalit, Oak Ridge, 27310 (US); Riffard, Francis, 69720 ST BONNET DE MURE (FR); Giboudeau, Julien, 69580 Sathonay Village (FR)
(74) Representative: Ström & Gulliksson AB

(56) References cited:
- EP-A2- 1 832 500
- CN-U- 212 861 666
- US-A- 2 769 656
- US-A- 3 321 236
- US-A- 6 030 017

## Description

### TECHNICAL FIELD

The disclosure relates generally to a mounting arrangement. In particular aspects, the disclosure relates to a mounting arrangement for mounting a cab to a chassis of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of vehicles, the cab is typically mounted to a chassis frame by means of a mounting arrangement. To provide softer travel and more comfort to the driver and passengers of the vehicle, such a mounting arrangement may often include an elastic bushing interface for preventing vibrations from the chassis propagating to the cab.

Such mounting arrangements typically forms a horizontal connection between the cab and the chassis frame. This poses a challenge in terms of wear of the bushing of the mounting arrangement. Furthermore, aligning the cab, chassis and mounting arrangement is a complex and time consuming process. CN 212 861 666 U discloses an example of a cab suspension structure.

### SUMMARY

The invention relates to a mounting arrangement for mounting a cab to a chassis according to claim 1.

Optionally in some examples, including in at least one preferred example, the fastening member may comprise a first end portion adapted to be mounted to the cab bracket or the chassis bracket. The fastening member may comprise a second end portion opposite to said first end portion and adapted to be arranged inside the aperture.

Optionally in some examples, including in at least one preferred example, the fastening member may be adapted to be mounted to the chassis bracket. A technical benefit may include that the fastening member enables mounting of the mounting unit from below, whereby the cab may rest on the mounting unit during mounting making aligning of the chassis and cab more efficient.

Optionally in some examples, including in at least one preferred example, the chassis bracket may comprise a mounting flange. The mounting flange may be adapted to support the mounting unit such that the mounting unit is supported by the mounting flange. A technical benefit may include that the cab may rest securely on top of the chassis bracket during aligning and mounting.

Optionally in some examples, including in at least one preferred example, the mounting unit may comprise a bushing. The core member may be mounted to the bushing. A technical benefit may include that the bushing may enable relative movement between the parts of the mounting arrangement, thereby enabling additional damping.

Optionally in some examples, including in at least one preferred example, the bushing may be in a flexible material such as an elastomeric material. A technical benefit may include that the bushing provides further damping between the cab and the chassis.

Optionally in some examples, including in at least one preferred example, the core member may resiliently arranged in the bushing. A technical benefit may include that the core member is movable in response to loads and vibrations, whereby the damping provided by the mounting arrangement may be improved.

Optionally in some examples, including in at least one preferred example, the core member and the bushing may be coaxially arranged along the mounting axis. A technical benefit may include that the mounting arrangement is more compact and space-efficient.

Optionally in some examples, including in at least one preferred example, the mounting unit may further comprise a housing, whereby the bushing may be mounted to the housing and the bushing may be arranged between the housing and the core member. A technical benefit may include that the bushing may provide relative movement between the core member and the fastening member relative to the housing enabling further damping.

Optionally in some examples, including in at least one preferred example, the fastening member may be adapted to be mounted to the mounting unit and to one of the cab bracket and the chassis bracket and wherein housing may be adapted to be mounted to the other of said cab bracket and chassis bracket.

According to the invention, the mounting arrangement may further comprise a cap damping member arranged at an end of the mounting unit facing the cab bracket, whereby the cab damping member may be arranged between the core member and the cab bracket. A technical benefit may include that the cab damping member may reduce and control rebound travel of the cab.

According to the invention, the mounting arrangement may further comprise a chassis damping member arranged at an end of the mounting unit facing the chassis bracket, whereby the chassis damping member may be arranged between the core member and the chassis bracket. A technical benefit may include that the chassis damping member may reduce and control compression travel of the cab.

Optionally in some examples, including in at least one preferred example, the chassis damping member and/or the cab damping member may be formed as an integrated part of the bushing. A technical benefit may include that a more space and cost efficient mounting arrangement is achieved.

Optionally in some examples, including in at least one preferred example, the chassis damping member and/or the cab damping member may formed as a separate element.

Optionally in some example, including in at least one preferred example, the cab bracket may comprise a guiding portion adapted to provide a guide for movement of the mounting unit in a direction extending substantially orthogonally to the mounting axis. A technical benefit may include that the mounting unit may be guided into position relative the chassis bracket during mounting and aligning.

Optionally in some examples, including in at least one preferred example, the mounting arrangement may further comprise a mounting unit fastening element adapted to be mounted to the mounting unit, whereby the mounting unit fastening element may be provided with a washer element and the cab damping member may be clamped between the washer element and the housing. A technical benefit may include that a secure and durable mounting of the cab damping member is achieved.

Optionally in some examples, including in at least one preferred example, the aperture may comprise a first aperture section and a second aperture section, wherein the second aperture section may be axially displaced relative the first aperture section along the mounting axis and wherein the first aperture section may be adapted to receive the fastening member and the second aperture section may be adapted to receive the mounting unit fastening element.

Optionally in some examples, including in at least one preferred example, the first aperture section may have a larger diameter than the second aperture section. A technical benefit may include that the fastening member is secured in the core member in a more durable and robust manner.

Optionally in some examples, including in at least one preferred example, the chassis bracket may be adapted to extend from the chassis in a direction extending at least partially along the mounting axis and/or the cab bracket may be adapted to extend from the cab in a direction extending at least partially along the mounting axis. A technical benefit may include that the brackets are more easily alignable and the chassis bracket potentially providing a positive stop for the cab bracket or cab during mounting and aligning.

According to a second aspect of the disclosure, a vehicle is provided. The vehicle may comprise a cab, a chassis and a mounting arrangement. The mounting arrangement may be a mounting arrangement according to any of the aforementioned examples. The second aspect of the disclosure may seek to provide a vehicle with a less complex and more efficient mounting of a cab to a chassis of a vehicle. A technical benefit may include that the cab is easily aligned and mounted to the chassis due to fastening member and mounting unit providing a guide since the cab and mounting unit may rest on the chassis during mounting and alignment. Another technical benefit is that the vertical interface between the chassis and cab enables space for damping elements for example for mitigating vertical rebound travel.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary mounting arrangement according to an example.
**FIG. 2** is an exemplary mounting arrangement according to an example.
**FIG. 3** is another view of FIG. 2 according to one example.
**FIG. 4** is another view of FIG. 2 according to one example.

### DETAILED DESCRIPTION

The detailed description set forth below provides information and examples of the disclosed technology with sufficient detail to enable those skilled in the art to practice the disclosure.

Mounting arrangements for mounting of a cab to a chassis of a vehicle are sometimes adapted to also minimize vibrations in the cabin and may be referred to as cab mount isolators. A cab mount isolator is a type of vibration isolation system used in automobiles, trucks, and other heavy vehicles to reduce the transmission of vibrations from the chassis to the cabin. The purpose of a cab mount isolator is to provide a comfortable and safe ride for the vehicle occupants by reducing the transfer of noise, vibrations, and harshness from the vehicle's engine, transmission, and suspension to the cabin.

The cab mount isolator functions by providing a flexible link between the vehicle's chassis and the cab. It may include a rubber or elastomeric component that is compressed between the chassis and the cab. The isolator is designed to absorb the vibrations and shocks generated by the vehicle's movement and prevent them from reaching the cab.

Cab mount isolators are typically installed at strategic locations around the vehicle's chassis, including the front and rear mounts, the transmission mount, and the cross members. The isolators can be designed to accommodate different types of loads and operating conditions, such as vertical, lateral, and longitudinal forces, and temperature variations.

In summary, the cab mount isolator plays a crucial role in providing a smooth and comfortable ride for the vehicle occupants, while also reducing the wear and tear on the vehicle's components.

Conventional interfaces for mounting of a cab to a chassis of the vehicle typically extend horizontally, whereby the installation of the cab to the chassis mainly takes place in a horizontal direction. Depending on the horizontal direction chosen for the interface, various challenges may occur.

In the case of a horizontal interface extending along the width of the vehicle (corresponding to a Y-direction of a global vehicle coordinate system), challenges may include a limited lifetime due to the elastic elements for damping separating from the rigid load bearing elements of the interface under repetitive cab yaw movement. This may in turn cause issues with the durability of the cab.

In the case of a horizontal interface extending along the length of the vehicle (corresponding to a X-direction of a global vehicle coordinate system), challenges may include difficulties with decking the cab to the chassis as well as issues with the driver comfort. Particularly in the field of heavy vehicles, such horizontal interfaces propagate forces and vibrations from the trailer to the cab, negatively impacting the driver comfort.

There is thus a challenge in the design of a mounting arrangement to balance the ability for the mounting arrangement to handle loads and vibrations and thereby function as an efficient cab mount isolator and the ability to enable easier and more durable mounting of the cab to the chassis.

The examples of the disclosure herein may serve to address the above issues and/or may bring other potential improvements or advantages relative to conventional mounting arrangements.

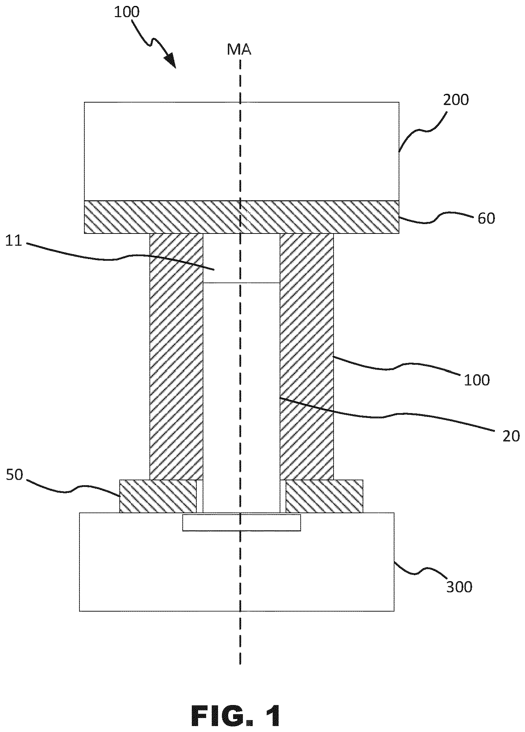

**FIG. 1** is an exemplary mounting arrangement **100** for mounting a cab **200** to a chassis **300** of a vehicle according to an example. **FIG. 1** schematically shows a partial cross-section of the mounting arrangement **100.**

The mounting arrangement **100** comprises a chassis bracket **50.** The chassis bracket **50** is adapted to be mounted to the chassis **300.**

The mounting arrangement **100** comprises a cab bracket **60.** The cab bracket 60 is adapted to be mounted to the cab **200.**

In addition, the mounting arrangement **100** comprises a mounting unit **10.** The mounting unit **10** is adapted to connect the chassis bracket **50** and the cab bracket **60.** Thus, the mounting unit **10** may be adapted to be connected to the chassis bracket **50** and to the cab bracket **60.** The mounting unit **10** may be connected to the chassis bracket **50** and to the cab bracket **60.**

The mounting unit **10** comprises a core member 45. The core member **45** comprises an aperture **11.** The aperture **11** is arranged to extend along a mounting axis **MA.** The mounting axis **MA** extends at least partially in a vertical direction.

The mounting arrangement **100** further comprises a fastening member **20.** The fastening member **20** is adapted to be mounted to the mounting unit **10.** The fastening member **20** is adapted to be mounted to the chassis bracket **50.** The fastening member **20** is arranged to extend along the mounting axis **MA** inside the aperture **11.**

The mounting arrangement **100** allows for vertical mounting of the cab **200** to the chassis **300** and a vertical interface for said mounting. The interface allows for easier mounting of the cab to the chassis and aligning of the cab to the chassis.

Further, the mounting arrangement according to the above enables additional space in the mounting arrangement for flexible elements and bushing for counteracting vibrations as well as compression and/or rebound travel.

In addition, the vertical interface allows for easier mounting and aligning due to enabling the cab to rest on the vertical interface during said mounting and aligning.

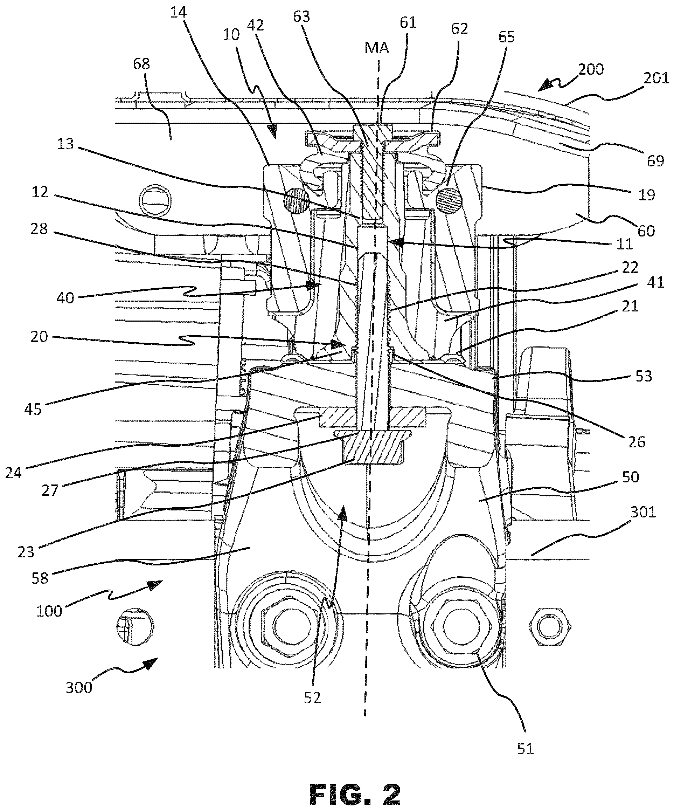

**FIG. 2** is a side view of a mounting arrangement of one example. A cross-section of the mounting arrangement is depicted.

In the depicted example, the vehicle may be a heavy vehicle such as a truck, bus or construction vehicle. It may however be envisioned that the vehicle is an automobile.

The mounting arrangement **100** may be a cab mounting isolator. Thus, the mounting arrangement **100** may be adapted to mitigate propagation of vibrations from the chassis to the cab.

The mounting arrangement **100** may be a front mounting arrangement. The mounting arrangement **100** may thus be adapted to connect a front portion of the chassis **300** and cab **200.** The mounting arrangement **100** may be adapted to be mounted to a front portion of the chassis **300** and a front portion of the cab **200.** A front portion may herein refer to a portion disposed in the front of the vehicle relative the forward travelling direction.

As described with reference to **FIG. 1****,** the fastening member **20** is adapted to be mounted to one of the cab bracket 60 and the chassis bracket **50.** Accordingly, the fastening member is mounted to either the cab bracket **60** or the chassis bracket **50.**

The fastening member **20** may comprise a first end portion **27.** The first end portion **27** may be adapted to be mounted to the cab bracket **60.** Alternatively, the first end portion **27** may be adapted to be mounted to the chassis bracket **50.** The fastening member **20** may comprise a second end portion **28.** The second end portion **28** may be opposite to the first end portion **27.** The second end portion **28** may be opposite to said first end portion **27** relative a lengthwise direction of the fastening member **20.** The second end portion **28** may be adapted to be arranged inside the aperture **11.**

The second end portion **28** may be fully accommodated in the aperture **11** such that it does not protrude outside said aperture **11** and the mounting unit **10.**

The second end portion **28** may be arranged such that it does not engage the cab bracket **60** or the chassis bracket **50.** In one example, the first end portion **27** may be mounted to the cab bracket **60,** whereby the second end portion **28** may be arranged such that it does not engage the chassis bracket **50.** In one example, the first end portion **27** may be mounted to the chassis bracket **50,** whereby the second end portion **28** may be arranged such that it does not engage the cab bracket **60.**

Referencing **FIG. 2****,** the fastening member **20** may be adapted to be mounted to the chassis bracket **50.** Hence, the first end portion **27** may be adapted to be mounted to the chassis bracket **50.** By means of having the fastening member **20** mounted to chassis bracket **50** instead of the cab bracket **60,** the mounting unit **10** may be mounted to the cab **200** before the cab **200** is placed on the chassis bracket **50** allowing for easy mounting and aligning.

Further referencing **FIG. 2****,** the second end portion **28** may be an upper portion of the fastening member **20** and the first end portion **27** may be lower portion of the fastening member **20.**

The fastening member **20** may be in the form of any conventional fastening member suitable for the application. In the depicted example, fastening member **20** may have a threaded portion **22.** The threaded portion **22** may be adapted to engage a corresponding threaded portion of the aperture **11.** The fastening member **20** may be in the form of a screw.

The fastening member **20** may have a have a fastening member head **23.** The mounting arrangement **100** may further comprise a washer member **24.** The washer member **24** may be arranged between the fastening member head **23** and the chassis bracket **50** or the cab bracket **60.**

In order for the cabin to rest on the chassis bracket **50** in a stable and secure manner, the chassis bracket **50** may comprise a mounting flange **53.** The mounting flange **53** may be adapted to support the mounting unit **10** such that the mounting unit **10** is supported by the mounting flange **53.** Thereby, the mounting unit **10** may be mounted to cab bracket 60 and be arranged on the mounting flange **53,** whereby the fastening member **20** may be mounted to the chassis bracket **50** and inserted and mounted to the mounting unit **10** via the aperture of the core member **45.**

The mounting flange **53** may comprise an upper support surface. A lower surface of the mounting unit **10** may be supported by the upper support surface. The lower surface of the mounting unit **10** may rest upon the upper support surface.

In one example, the fastening member **20** may be mounted to the mounting flange **53.** The mounting flange **53** may comprise a hole adapted to receive the fastening member **20.** The hole of the mounting flange **53** may extend along the mounting axis **MA.**

In the depicted example, the washer member **24** is arranged between the fastening member head **23** and the mounting flange **53.** Thus, the fastening member head **23** is clamped between the mounting flange **53** and the fastening member head **23.**

The mounting arrangement **100** may comprise a bushing **40.** The core member **45** may be mounted to the bushing **40.**

Further, the vertical interface allows for use of a bushing enabling more travel with softer rubber while achieving good durability and preventing additional maintenance. In conventional mounting arrangements, a compromise between good driver comfort and good durability of the mounting arrangement usually has to be made.

Advantageously, the bushing **40** may be in a flexible material. The bushing **40** may be in an elastic material.

The flexible material may be an elastomeric material such as rubber.

The core member **45** may be resiliently arranged in the bushing **40.**

Further referencing **FIG. 2****,** the core member **45** and the bushing **40** may be coaxially arranged along the mounting axis **MA.** Further, the aperture **11** of the core member **45** and the bushing **40** may be coaxially arranged along the mounting axis **MA.**

The core member 45 may be in a rigid material such as metal. Preferably, the core member 45 is in aluminum or steel.

The bushing **40** may be mounted to the core member **45.** The bushing **40** may form a sleeve treaded onto the core member **45.** Advantageously, the bushing **40** may wrap around the core member **45.** The bushing **40** may be substantially annular.

As further depicted in **FIG. 2****,** the mounting unit **10** may comprise a housing **14.** The housing 14 may form an outer surface of the mounting unit 10. The housing **14** may be mountable to the chassis bracket **60** and the cab bracket **50.**

In the depicted example, the bushing **40** may be mounted to the housing **14.** The bushing **40** may be arranged between the housing **14** and the core member **45.**

The core member **45** may be arranged inside the housing **14.** Accordingly, the housing **14** may be adapted to accommodate the core member **45.**

The bushing **40** may be fitted into the housing **14.** The bushing **40** may separate the core member **45** from the housing **14.** Due to the bushing **40** preferably being in a flexible material, the bushing **40** may be adapted to flexibly retain the core member **45** to the housing **14.** The bushing **40** may thus provide damping between the core member **45** and the housing **14.** The bushing **40** may allow for relative movement between the core member **45** and the housing **14.**

The fastening member **20** may be adapted to be mounted to the mounting unit **10.** As aforementioned, the fastening member **20** may be adapted to be mounted to one of the cab bracket **60** and the chassis bracket **50.** The housing **20** may be adapted to be mounted to the other of said cab bracket 60 and chassis bracket **50.**

In the depicted example, the fastening member may be mounted to the housing **14** and to the chassis bracket **50.** Further, the housing **14** may be mounted to the cab bracket **50.** The housing **14** may be mounted to the cab bracket **50** by means of one or more housing fastening elements **65.** The housing fastening elements **65** may be horizontally arranged. The housing fastening elements **65** may extend through holes in the housing and corresponding holes in the cab bracket **50.**

Again referencing **FIG. 2****,** the mounting arrangement **100** may be provided with means for controlling the load exerted on the cab from the chassis and the behavior of the cab in relation to the chassis. Hence, the mounting arrangement may function as a cab mount isolator. Thus, the mounting arrangement **100** may be considered a cab mount isolator.

The mounting arrangement **100** may comprise a cab damping member **42.** The cab damping member **42** may be arranged at an end of the mounting unit **10** facing the cab bracket **60.** The cab damping member **42** may be arranged between the core member **45** and the cab bracket **60.**

The cab damping member **42** allows for control of the rebound travel of the cab **200** relative the chassis **300.**

Rebound travel refers to the movement of the cab as suspension between the cab and chassis rebounds after being compressed, such as when the vehicle goes over a bump or a pothole.

When the vehicle encounters a bump, the cab damping member **42** may compress to absorb the shock, and when the cab moves back to its original position, the cab damping member **42** rebounds, or expands back to its original length. This is what is known as rebound travel.

The amount of rebound travel is determined by the design of the cab damping member. A cab damping member that is too soft or has too much rebound travel can lead to instability, while a cab damping member that is too stiff can result in a harsh ride.

Rebound travel is an important factor in determining a vehicle's overall ride quality and handling characteristics, and suspension systems are designed to balance the need for good handling with a comfortable ride.

Thus, the cab damping member **42** may be adapted to control rebound travel of the cab **200** relative the chassis **300.** The cab damping member **42** may be adapted to control vertical rebound travel of the cab **200** relative the chassis **300.**

The cab damping member **42** may be in a flexible material such as an elastomeric material such as rubber.

The cab damping member **42** may be arranged at an upper portion of the mounting unit **10.** The cab damping member **42** may face a lower surface of the cab bracket **60.**

The cab damping member **42** may be connected to the housing **14** of the mounting unit **10.** The cab damping member **42** may be provided as an annular element crimped onto a collar of the mounting unit **10.** The housing **14** may comprise the collar.

In the depicted example, the cab damping member **42** may be provided in the form of a bump-stop. Hence, the cab damping member **42** may be considered a bump-stop.

The mounting arrangement **100** may comprise a chassis damping member **41.** The chassis damping member **41** may be arranged at an end of the mounting unit **10** facing the chassis bracket **50.** The chassis damping member **41** may be arranged between the core member **45** and the chassis bracket **50.**

The chassis damping member **41** allows for control of the compression travel of the cab **200** relative the chassis **300.**

Compression travel refers to the movement of the cab as suspension between the cab and chassis when the vehicle is traveling over uneven surfaces such as bumps, potholes, or speed bumps. When a vehicle encounters a bump or uneven terrain, the chassis will move upwards, and the chassis damping member may compress to absorb the shock.

The compression travel may be considered the distance that the chassis damping member travels when it compresses. This distance is important because it determines how well the mounting arrangement can absorb shocks and vibrations from the road surface. A longer compression travel distance can provide a smoother ride and reduce the impact of shocks on the vehicle's body and components.

Compression travel is influenced by the design of the chassis damping member. The chassis damping member may be designed to enable a longer compression travel distance to provide a smoother ride or a shorter travel distance to provide better handling and stability.

Overall, compression travel plays a significant role in determining the ride quality and handling of a vehicle.

Thus, the chassis damping member **41** may be adapted to control compression travel of the cab **200** relative the chassis **300.** The chassis damping member **41** may be adapted to control vertical compression of the cab **200** relative the chassis **300.**

The chassis damping member **41** may be in a flexible material such as an elastomeric material such as rubber.

The chassis damping member **41** may be arranged at a lower portion of the mounting unit 10. The chassis damping member **41** may face an upper surface of the chassis bracket **50.**

The chassis damping member **41** may be connected to the housing **14** of the mounting unit 10. The chassis damping member 41 may also be connected to the core member **45.** In one example, the chassis damping member **41** may be mounted to the core member **45.**

The chassis damping member **41** may be provided as an annular element. The chassis damping member **41** may be crimped onto the core member **45.** A portion of the chassis damping member **41** may protrude out of the housing **14.**

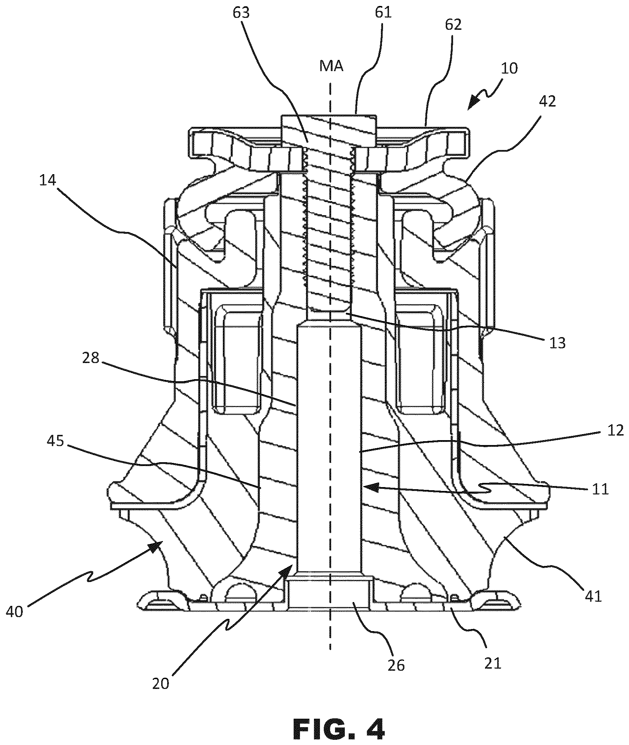

Further referencing **FIG. 4****,** the fastening member **20** may be provided with a fastening member washer **21.** The fastening member washer **21** may be an embedded washer. The chassis damping member **41** may be clamped between the fastening member washer **21** and the mounting unit **10.** The chassis damping member **41** may be clamped between the fastening member washer **21** and the housing **14.**

The fastening member washer **21** may be arranged to be brought into contact with the chassis bracket. Advantageously, the fastening member washer **21** may be arranged to be brought into contact with the mounting flange of the chassis bracket.

In the depicted example, a lower surface of the fastening member washer **21** is in contact with an upper surface of the chassis bracket, e.g. an upper surface of the mounting flange.

The chassis damping member **41** and/or the cab damping member **42** may be formed as a separate element.

The chassis damping member **41** and/or the cab damping member **42** may be formed as an integrated part of the bushing **40.**

In the depicted example, the cab damping member **42** may be formed as a separate element while the chassis damping member **41** is provided as an integrated part of the bushing **40.** Hence, the chassis damping member 41 may be provided as a portion of the bushing protruding out of the housing **14** towards the chassis bracket **50.**

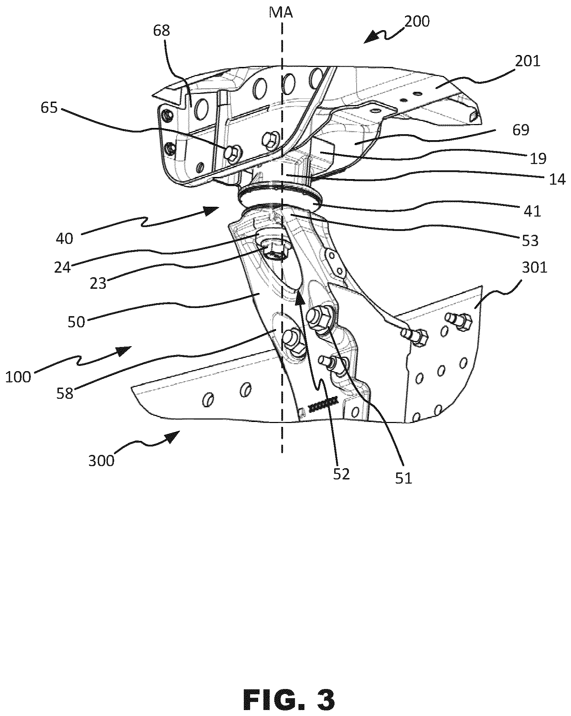

**FIG. 3** depicts a mounting arrangement of one example in a perspective view.

The chassis bracket **50** may be adapted to extend from the chassis **300.** The chassis bracket **50** may be adapted to extend from the chassis 300 in a direction extending at least partially along the mounting axis **MA.**

The chassis bracket **50** may comprise a chassis bracket arm member **58.** The chassis bracket arm member **58** may be arranged to protrude from the chassis at least partially along the mounting axis **MA** and towards the cab bracket **60.**

The chassis bracket **50** may be adapted to extend at least partially in a vertical direction. The chassis bracket arm member **58** may be adapted to extend at least partially in a vertical direction.

The chassis bracket **50** may be mounted to the chassis **300,** e.g. the chassis frame **301** via one or more chassis bracket fasteners **51.** In one example, the one or more chassis bracket fasteners **51** may be in the form of bolts. The one or more chassis bracket fasteners **51** may be horizontally arranged. The one or more chassis bracket fasteners **51** may be arranged in corresponding holes in the chassis bracket **50** and the chassis **300.**

In the depicted example, the chassis bracket arm member **58** may provided with one or more holes adapted to receive the one or more chassis bracket fasteners **51** for mounting of the chassis bracket **50** to the chassis **300,** e.g. the chassis frame **301.**

The cab bracket **60** may be adapted to extend from the cab **200.** The cab bracket **60** may be adapted to extend from the cab **200** in a direction extending at least partially along the mounting axis **MA.**

The cab bracket **60** may comprise a cab bracket flange **68.** The cab bracket flange **68** may be arranged to protrude from the cab **200** at least partially along the mounting axis **MA** and towards the chassis bracket **50.**

The cab bracket **60** may be adapted to extend at least partially in a vertical direction.

The cab bracket **60** may be provided with one or more holes for receiving the one or more housing fastening elements **65** for mounting the mounting unit **10** to the cab bracket **60.** In one example, the cab bracket flange **68** may be provided with the one or more holes for receiving the one or more housing fastening elements **65** for mounting the mounting unit **10** to the cab bracket **60.**

The cab bracket **60** may comprise a guiding portion **69.** The guiding portion **69** may be adapted to provide a guide for movement of the mounting unit **10.** The guiding portion **69** may be adapted to provide a guide for movement of the mounting unit **10** in a direction extending substantially orthogonally to the mounting axis **MA.** The guiding portion **69** may extend in a horizontal direction.

The guiding portion **69** may be adapted to receive a portion of the mounting unit **10.** The mounting unit **10** may be movable received in the guiding portion **69.** The guiding portion 69 may thus be movably mounted to the guiding portion **69.** The mounting unit **10** may be movable along the guiding portion **69.** The mounting unit **10** may be movable along the guiding portion **69** to a mounting position wherein the mounting unit **10** is aligned with the chassis bracket.

The guiding portion **69** may be adapted to receive an upper portion of the mounting unit **10.** The guiding portion **69** may be adapted to receive the housing **14** of the mounting unit **10.** The guiding portion **69** may be adapted to receive an upper portion of the housing **14.**

The guiding portion **69** may form a guiding track. The guiding track may extend substantially orthogonally to the mounting axis **MA.** The guiding track may comprise a profile element. In the depicted example, the guiding track comprises a U-profile.

In the depicted example, the guiding portion **69** is arranged to extend along the length of the vehicle. It may however envisioned that the guiding portion may extend along the width of the vehicle.

In one example, the guiding portion **69** may be formed as a part of the cab bracket flange **68.** In one example, the guiding portion **69** may be mounted to the cab bracket flange **68.**

**FIG. 4** depicts a cross-section of a mounting unit of a mounting arrangement of one example.

Referencing **FIG. 4****,** the mounting arrangement **100** may comprise a mounting unit fastening element 63. The mounting unit fastening element **63** may be adapted to be mounted to the mounting unit **10.** The mounting unit fastening element **63** may be provided with a washer element **62.** The cab damping member **42** may be clamped between the washer element **62** and the housing **14.**

The washer element **62** may be arranged to come into contact with the cab bracket.

The mounting unit fastening element **63** may be arranged to extend along the mounting axis **MA.** The mounting unit fastening element **63** may be connected to the core member **45.**

The mounting unit fastening element **63** may be mounted to the aperture **11.** Thus, both the fastening member **20** and the mounting unit fastening element **63** may be mounted to the aperture **11.**

The aperture **11** may comprise a first aperture section **12** and a second aperture section **13.** The second aperture section **13** may axially displaced relative the first aperture section **12** along the mounting axis **MA.** The first aperture section **12** may be adapted to receive the fastening member **20.** The second aperture section **13** may be adapted to receive the mounting unit fastening element **63.**

In the depicted example, the fastening member **20** is mounted to the chassis bracket. The first aperture section **12** may thus be considered a lower portion of the aperture **11.** Correspondingly, the second aperture section **13** may be considered an upper portion of the aperture **11.**

The aperture **11** may be adapted to secure the position of the fastening member 20 and the mounting unit fastening element **63.** Thereby, the potential risk for the fastening member **20** and the mounting unit fastening element **63** coming into contact is mitigated.

The diameter of the first aperture section **12** may have a different diameter than the second aperture section **13.** Preferably, the first aperture section **12** may have a larger diameter than the section aperture section **13.** Thereby, a seat for the fastening member **20** is provided by the walls of the second aperture section **13.** The formed seat secures the position of the fastening member **20.**

## Claims

1. A mounting arrangement **(100)** for mounting a cab **(200)** to a chassis **(300)** of a vehicle, the mounting arrangement **(100)** comprising:
- a chassis bracket **(50)** adapted to be mounted to the chassis **(300),**
- a cab bracket **(60)** adapted to be mounted to the cab **(200),** and
- a mounting unit **(10)** adapted to connect the chassis bracket **(50)** and the cab bracket **(60),** wherein the mounting unit **(10)** comprises a core member **(45),** the core member **(45)** comprising an aperture **(11)** being arranged to extend along a mounting axis **(MA)** extending at least partially in a vertical direction,
whereby the mounting arrangement **(100)** further comprises a fastening member **(20)** adapted to be mounted to the mounting unit **(10)** and one of the cab bracket **(60)** and the chassis bracket **(50),** the fastening member **(20)** being arranged to extend along the mounting axis **(MA)** inside the aperture **(11),** and
whereby the mounting arrangement further comprises:
a cab damping member **(42)** arranged at an end of the mounting unit **(10)** facing the cab bracket **(60),** whereby the cap damping member **(42)** is arranged between the core member **(45)** and the cab bracket **(60),** and
**characterised in that** it further comprise a chassis damping member (41) arranged at an end of the mounting unit (10) facing the chassis bracket (50), whereby the chassis damping member (41) is arranged between the core member (45) and the chassis bracket (50).

2. The mounting arrangement **(100)** of claim 1, wherein the fastening member **(20)** comprises a first end portion **(27)** adapted to be mounted to the cab bracket **(60)** or the chassis bracket **(50)** and a second end portion **(28)** opposite to said first end portion **(27)** and adapted to be arranged inside the aperture **(11).**

3. The mounting arrangement **(100)** of any of claims 1-2, wherein the fastening member **(20)** is adapted to be mounted to the chassis bracket **(50).**

4. The mounting arrangement **(100)** of any of claims 1-3, wherein the chassis bracket **(50)** comprises a mounting flange **(53)** adapted to support the mounting unit **(10)** such that the mounting unit (10) is supported by said mounting flange **(53).**

5. The mounting arrangement **(100)** of any of claims 1-4, wherein the mounting unit **(10)** comprises a bushing **(40)** and the core member **(45)** is mounted to the bushing **(40).**

6. The mounting arrangement **(100)** of claim 5, wherein the bushing **(40)** is in a flexible material such as an elastomeric material.

7. The mounting arrangement **(100)** of any of claim 5-6, wherein the mounting unit **(10)** further comprises a housing **(14),** whereby the bushing **(40)** is mounted to the housing **(14)** and the bushing **(40)** is arranged between the housing **(14)** and the core member **(45).**

8. The mounting arrangement **(100)** of any of claims 1-7, wherein cab bracket **(60)** comprises a guiding portion **(69)** adapted to provide a guide for movement of the mounting unit **(10)** in a direction extending substantially orthogonally to the mounting axis **(MA).**

9. The mounting arrangement **(100)** of any of claim 1-8, further comprising:
a mounting unit fastening element **(63)** adapted to be mounted to the mounting unit **(10),** whereby the mounting unit fastening element **(63)** is provided with a washer element **(62)** and the cab damping member **(42)** is clamped between the washer element **(62)** and the housing **(14).**

10. The mounting arrangement **(100)** of claim 9, wherein the aperture **(11)** comprises a first aperture section **(12)** and a second aperture section (13), wherein the second aperture section **(13)** is axially displaced relative to the first aperture section **(12)** along the mounting axis **(MA)** and wherein the first aperture section **(12)** is adapted to receive the fastening member **(20)** and the second aperture section **(13)** adapted to receive the mounting unit fastening element **(63).**

11. The mounting arrangement **(100)** of claim 10, wherein the first aperture section **(12)** has a larger diameter than the second aperture section **(13).**

12. The mounting arrangement **(100)** of any of claims 1-11, wherein the chassis bracket **(50)** is adapted to extend from the chassis **(300)** in a direction extending at least partially along the mounting axis **(MA)** and/or the cab bracket **(60)** is adapted to extend from the cab **(200)** in a direction extending at least partially along the mounting axis **(MA).**

13. A vehicle comprising a cab **(200),** a chassis **(300)** and a mounting arrangement **(10)** of any of claims 1-12.

## Patentansprüche

1. Montageanordnung **(100)** zum Montieren einer Fahrerkabine **(200)** an einem Fahrgestell **(300)** eines Fahrzeugs, wobei die Montageanordnung **(100)** Folgendes umfasst:
- eine Fahrgestellhalterung **(50),** die so ausgebildet ist, dass sie am Fahrgestell **(300)** montiert werden kann,
- eine Fahrerkabinenhalterung **(60),** die so ausgebildet ist, dass sie an der Fahrerkabine **(200)** montiert werden kann, und
- eine Montageeinheit **(10),** die so ausgebildet ist, dass sie die Fahrgestellhalterung **(50)** und die Fahrerkabinenhalterung **(60)** miteinander verbindet, wobei die Montageeinheit **(10)** ein Kernelement **(45)** umfasst, wobei das Kernelement **(45)** eine Öffnung **(11)** umfasst, die so angeordnet ist, dass sie sich zumindest teilweise in vertikaler Richtung entlang einer Montageachse **(MA)** erstreckt,
wobei die Montageanordnung **(100)** ferner ein Befestigungselement **(20)** umfasst, das so ausgebildet ist, dass es an der Montageeinheit **(10)** und entweder an der Fahrerkabinenhalterung **(60)** oder an der Fahrgestellhalterung **(50)** angebracht werden kann, wobei das Befestigungselement **(20)** so angeordnet ist, dass es sich entlang der Montageachse **(MA)** innerhalb der Öffnung **(11)** erstreckt, und
wobei die Montageanordnung ferner Folgendes umfasst:
ein Fahrerkabinen-Dämpfungselement **(42),** das an einem Ende der Montageeinheit **(10)** angeordnet ist, das der Fahrerkabinenhalterung **(60)** zugewandt ist, wobei das Fahrerkabinen-Dämpfungselement **(42)** zwischen dem Kernelement **(45)** und der Fahrerkabinenhalterung **(60)** angeordnet ist; und
**dadurch gekennzeichnet, dass** sie ferner ein Fahrgestell-Dämpfungselement (41) umfasst, das an einem Ende der Montageeinheit (10) angeordnet ist, das der Fahrgestellhalterung (50) zugewandt ist, wobei das Fahrgestell-Dämpfungselement (41) zwischen dem Kernelement (45) und der Fahrgestellhalterung (50) angeordnet ist.

2. Montageanordnung **(100)** nach Anspruch 1, wobei das Befestigungselement **(20)** einen ersten Endabschnitt **(27),** der so ausgebildet ist, dass er an der Fahrerkabinenhalterung **(60)** oder der Fahrgestellhalterung **(50)** angebracht werden kann, und einen zweiten Endabschnitt **(28)** umfasst, der gegenüber dem ersten Endabschnitt **(27)** angeordnet ist und so ausgebildet ist, dass er im Inneren der Öffnung **(11)** angeordnet werden kann.

3. Montageanordnung **(100)** nach einem der Ansprüche 1-2, wobei das Befestigungselement **(20)** so ausgebildet ist, dass es an der Fahrgestellhalterung **(50)** montiert werden kann.

4. Montageanordnung **(100)** nach einem der Ansprüche 1-3, wobei die Fahrgestellhalterung **(50)** einen Montageflansch **(53)** umfasst, der so ausgebildet ist, dass er die Montageeinheit **(10)** so stützt, dass die Montageeinheit (10) vom Montageflansch **(53)** getragen wird.

5. Montageanordnung **(100)** nach einem der Ansprüche 1-4, wobei die Montageeinheit **(10)** eine Buchse **(40)** umfasst und das Kernelement **(45)** an der Buchse **(40)** montiert ist.

6. Montageanordnung **(100)** nach Anspruch 5, wobei die Buchse **(40)** aus einem flexiblen Material, wie z. B. einem Elastomer, besteht.

7. Montageanordnung **(100)** nach einem der Ansprüche 5-6, wobei die Montageeinheit **(10)** ferner ein Gehäuse **(14)** umfasst, wobei die Buchse **(40)** an dem Gehäuse **(14)** montiert ist und die Buchse **(40)** zwischen dem Gehäuse **(14)** und dem Kernelement **(45)** angeordnet ist.

8. Montageanordnung **(100)** nach einem der Ansprüche 1-7, wobei die Fahrerkabinenhalterung **(60)** einen Führungsabschnitt **(69)** umfasst, der so ausgebildet ist, dass er eine Führung für die Bewegung der Montageeinheit **(10)** in einer Richtung bereitstellt, die sich im Wesentlichen orthogonal zur Montageachse **(MA)** erstreckt.

9. Montageanordnung **(100)** nach einem der Ansprüche 1-8, die ferner Folgendes umfasst:
ein Montageeinheiten-Befestigungselement **(63),** das so ausgebildet ist, dass es an der Montageeinheit **(10)** montiert werden kann, wobei das Montageeinheiten-Befestigungselement **(63)** mit einem Scheibenelement **(62)** versehen ist und das Fahrerkabinen-Dämpfungselement **(42)** zwischen dem Scheibenelement **(62)** und dem Gehäuse **(14)** eingeklemmt ist.

10. Montageanordnung **(100)** nach Anspruch 9, wobei die Öffnung **(11)** einen ersten Öffnungsabschnitt **(12)** und einen zweiten Öffnungsabschnitt (13) umfasst, wobei der zweite Öffnungsabschnitt **(13)** relativ zum ersten Öffnungsabschnitt **(12)** entlang der Montageachse **(MA)** axial verschoben ist und wobei der erste Öffnungsabschnitt **(12)** so ausgebildet ist, dass er das Befestigungselement **(20)** aufnehmen kann, und der zweite Öffnungsabschnitt **(13)** so ausgebildet ist, dass er das Montageeinheiten-Befestigungselement **(63)** aufnehmen kann.

11. Montageanordnung **(100)** nach Anspruch 10, wobei der erste Öffnungsabschnitt **(12)** einen größeren Durchmesser als der zweite Öffnungsabschnitt **(13)** aufweist.

12. Montageanordnung **(100)** nach einem der Ansprüche 1-11, wobei die Fahrgestellhalterung **(50)** so ausgebildet ist, dass sie sich vom Fahrgestell **(300)** in einer Richtung erstreckt, die zumindest teilweise entlang der Montageachse **(MA)** verläuft, und/oder die Fahrerkabinenhalterung **(60)** so ausgebildet ist, dass sie sich von der Fahrerkabine **(200)** in einer Richtung erstreckt, die zumindest teilweise entlang der Montageachse **(MA)** verläuft.

13. Fahrzeug, umfassend eine Fahrerkabine **(200),** ein Fahrgestell **(300)** und eine Montageanordnung **(10)** nach einem der Ansprüche 1-12.

## Revendications

1. Dispositif de montage **(100)** pour monter une cabine **(200)** sur un châssis **(300)** d'un
véhicule, le dispositif de montage **(100)** comprenant :
- un support de châssis **(50)** conçu pour être monté sur le châssis **(300),**
- un support de cabine **(60)** conçu pour être monté sur la cabine **(200),** et
- une unité de montage **(10)** adaptée pour relier le support de châssis **(50)** et le support de cabine **(60),** dans lequel l'unité de montage **(10)** comprend un élément central **(45),** l'élément central **(45)** comprenant une ouverture **(11)** agencée pour s'étendre le long d'un axe de montage **(MA)** s'étendant au moins partiellement dans une direction verticale, dans lequel le dispositif de montage **(100)** comprend en outre un élément de fixation **(20)** conçu pour être monté sur l'unité de montage **(10)** et sur l'un parmi le support de cabine **(60)** et le support de châssis **(50),** l'élément de fixation **(20)** étant conçu pour s'étendre le long de l'axe de montage **(MA)** à l'intérieur de l'ouverture **(11),** et
dans lequel le dispositif de montage comprend en outre :
un élément amortisseur de cabine **(42)** disposé à une extrémité de l'unité de montage **(10)** faisant face au support de cabine **(60),** dans lequel l'élément amortisseur de capot **(42)** est disposé entre l'élément central **(45)** et le support de cabine **(60),** et
**caractérisé en ce qu'**il comprend en outre un élément amortisseur de châssis (41) disposé à une extrémité de l'unité de montage (10) en face du support de châssis (50), dans lequel l'élément amortisseur de châssis (41) est disposé entre l'élément central (45) et le support de châssis (50).

2. Dispositif de montage **(100)** selon la revendication 1, dans lequel l'élément de fixation **(20)** comprend une première extrémité **(27)** adaptée pour être montée sur le support de cabine **(60)** ou le support de châssis **(50)** et une deuxième extrémité **(28)** opposée à ladite première extrémité **(27)** et adaptée pour être disposée à l'intérieur de l'ouverture **(11).**

3. Dispositif de montage **(100)** selon l'une des revendications 1 à 2, dans lequel l'élément de fixation **(20)** est conçu pour être monté sur le support de châssis **(50).**

4. Dispositif de montage **(100)** selon l'une des revendications 1 à 3, dans lequel le support de châssis **(50)** comprend une bride de montage **(53)** adaptée pour supporter l'unité de montage **(10)** de sorte que ladite unité de montage (10) soit supportée par ladite bride de montage **(53).**

5. Dispositif de montage **(100)** selon l'une des revendications 1 à 4, dans lequel l'unité de montage **(10)** comprend une douille **(40)** et l'élément central **(45)** est monté sur la douille **(40).**

6. Dispositif de montage **(100)** selon la revendication 5, dans lequel la douille **(40)** est en matériau souple tel qu'un élastomère.

7. Dispositif de montage **(100)** selon l'une des revendications 5 à 6, dans lequel l'unité de montage **(10)** comprend en outre un boîtier **(14),** dans lequel la douille **(40)** est montée sur le boîtier **(14)** et la douille **(40)** est disposée entre le boîtier **(14)** et l'élément central **(45).**

8. Dispositif de montage **(100)** selon l'une des revendications 1 à 7, dans lequel le support de cabine **(60)** comprend une partie de guidage **(69)** adaptée pour fournir un guide pour le mouvement de l'unité de montage **(10)** dans une direction s'étendant sensiblement perpendiculairement à l'axe de montage **(MA).**

9. Dispositif de montage **(100)** selon l'une des revendications 1 à 8, comprenant en outre :
un élément de fixation de l'unité de montage **(63)** adapté pour être monté sur l'unité de montage **(10),** dans lequel l'élément de fixation de l'unité de montage **(63)** est pourvu d'une rondelle **(62)** et l'élément amortisseur de cabine **(42)** est serré entre la rondelle **(62)** et le boîtier **(14).**

10. Dispositif de montage **(100)** selon la revendication 9, dans lequel l'ouverture **(11)** comprend une première section d'ouverture **(12)** et une deuxième section d'ouverture (13), dans lequel la deuxième section d'ouverture **(13)** est déplacée axialement par rapport à la première section d'ouverture **(12)** le long de l'axe de montage **(MA)** et dans lequel la première section d'ouverture **(12)** est adaptée pour recevoir l'élément de fixation **(20)** et la deuxième section d'ouverture **(13)** est adaptée pour recevoir l'élément de fixation de l'unité de montage **(63).**

11. Dispositif de montage **(100)** selon la revendication 10, dans lequel la première section d'ouverture **(12)** présente un diamètre plus grand que la deuxième section d'ouverture **(13).**

12. Dispositif de montage **(100)** selon l'une des revendications 1 à 11, dans lequel le support de châssis **(50)** est conçu pour s'étendre à partir du châssis **(300)** dans une direction suivant au moins partiellement l'axe de montage **(MA)** et/ou le support de cabine **(60)** est conçu pour s'étendre à partir de la cabine **(200)** dans une direction suivant au moins partiellement l'axe de montage **(MA).**

13. Véhicule comprenant une cabine **(200),** un châssis **(300)** et un dispositif de montage **(10)** selon l'une des revendications 1 à 12.
